# EUROPEAN PATENT APPLICATION

(11) **EP 4 361 219 A1**
(43) Date of publication of application: **01.05.2024**
(21) Application number: 22828283.6
(22) Date of filing: 15.06.2022
(51) Int. Cl.: C08L 83/07, C08K 3/013, C08K 3/08, C08K 3/16, C08K 5/52, C08K 5/541, C08L 83/04, C08L 83/05, C08L 83/14

(54) **PLATINUM CATALYST MIXTURE, CURABLE LIQUID SILICONE COMPOSITION AND METHOD FOR CURING CURABLE LIQUID SILICONE COMPOSITION, AND METHOD FOR PREPARING PLATINUM CATALYST MIXTURE**

(30) Priority: 22.06.2021 JP 2021103168
(71) Applicant: SHIN-ETSU CHEMICAL CO., LTD., Tokyo 1000005 (JP)
(72) Inventor: HARA Hiroyasu, Annaka-shi, Gunma 379-0224 (JP)
(74) Representative: Mewburn Ellis LLP
(86) International application number: PCT/JP2022/023877
(87) International publication number: WO 2022/270366

(57) **Abstract**

An aerobic platinum catalyst mixture comprising a reaction mixture of a platinum-alkenyl group-containing organosiloxane complex and an organic silicon compound having at least one SiH group per molecule in an amount that makes a molar excess of hydrogen atoms bonded to silicon atoms (SiH groups) relative to the alkenyl groups in the platinum-alkenyl group-containing organosiloxane complex. The platinum catalyst mixture has the property of catalytic activity being low as a hydrosilylation addition reaction catalyst when in an oxygen-free, low-moisture content closed state in which contact with moisture (humidity) and oxygen is cut off and being activated as a hydrosilylation addition reaction catalyst by contact with moisture (humidity) and/or oxygen in the atmosphere.

## Description

### TECHNICAL FIELD

This invention relates to an aerobic platinum catalyst mixture adapted to be activated as a hydrosilylation addition reaction catalyst upon contact with airborne water (or moisture) and/or oxygen; a curable liquid silicone composition (curable liquid silicone rubber composition or curable liquid silicone gel composition) comprising the platinum catalyst mixture and adapted to cure into a silicone rubber cured product (or silicone elastomer) or silicone gel cured product; a method of curing the curable liquid silicone composition; and a method of preparing the platinum catalyst mixture.

### BACKGROUND ART

In view of the demand for energy saving and the sustainable development goals (SDGs), the requirement to cure liquid silicone compositions without heating becomes stronger in these years. For simple use of such compositions or in order to avoid any errors in the use stage, one-pack compositions are preferred.

For liquid silicone compositions, crosslinking reaction that enables to cure one-pack compositions without heat is condensation reaction, UV radical reaction or addition reaction. Some compositions have an extremely shortened storage life and some compositions are designed such that the catalyst may be activated by UV. All these compositions are insufficient in deep-section cure or cure in dark or UV-shielded regions in the curing step, limiting the field to which they are applicable. When UV irradiation is necessary, electric energy is needed therefor.

In conjunction with the technology of curing silicone compositions into rubber or gel through crosslinking reaction utilizing platinum catalyst-aided addition reaction, the following prior art techniques are known that aim to ensure the one-pack storage stability and pot life of unreacted compositions and to cure at lower temperatures. All these compositions, however, fail to fulfil one-pack storage stability in a closed container at the commercial (distribution and sales) level and room temperature cure after container opening.

### PRIOR ART DOCUMENTS

### PATENT DOCUMENTS

Patent Document 1: USP 3,989,666
Patent Document 2: USP 3,989,667
Patent Document 3: USP 4,510,094
Patent Document 4: JP-A H09-143373
Patent Document 5: JP-A H06-192576
Patent Document 6: JP-A H09-141107

### SUMMARY OF INVENTION

### TECHNICAL PROBLEM

An object of the invention, which has been made under the above-mentioned circumstances, is to provide an aerobic platinum catalyst mixture which is activated as a hydrosilylation addition reaction catalyst upon contact with the ambient atmosphere or air, specifically upon contact with airborne water (moisture) and/or oxygen; a curable liquid silicone composition comprising the platinum catalyst mixture, having one-pack long-term storage stability in a closed container at a storage temperature from refrigeration to room temperature (from -5°C to 38°C), and adapted to cure in unheated open conditions (specifically, cure at room temperature (23°C±15°C) upon contact with airborne water (moisture) and/or oxygen) into a silicone rubber cured product or silicone gel cured product which has cured not only at the air-contacting surface, but also to a deep section; a method of curing the curable liquid silicone composition; and a method of preparing the platinum catalyst mixture.

### SOLUTION TO PROBLEM

Making extensive investigations to solve the outstanding problems, the inventor has found that a reaction mixture obtained by uniformly mixing a platinum/alkenyl-containing organosiloxane complex with an organosilicon compound having at least one silicon-bonded hydrogen atom (i.e., SiH or hydrosilyl group) per molecule in an oxygen-free atmosphere in such a ratio as to provide a molar excess of the SiH group in the organosilicon compound per mole of the alkenyl group in the complex is activated upon contact with airborne water (moisture) and/or oxygen and functions as an aerobic platinum catalyst (or hydrosilylation addition reaction catalyst), and that a curable liquid silicone composition comprising the aerobic platinum catalyst mixture becomes a curable liquid silicone rubber or gel composition exhibiting long-term storage stability as one-pack composition and satisfactory deep-section cure in unheated curing step. The invention is predicated on this finding.

According to the invention, a liquid silicone composition is cured into a silicone rubber or gel through the curing or crosslinking reaction system utilizing hydrosilylation addition reaction promoted by the aerobic platinum catalyst mixture. It deserves special mention that a curable liquid silicone composition comprising the inventive platinum catalyst mixture has "one-pack storage stability in a closed container" at a temperature from refrigeration to room temperature (in the range from -5°C to 38°C), and adapted to cure in unheated open conditions (specifically, cure at room temperature (23°C±15°C) upon contact with airborne water (moisture) and/or oxygen), that is, to activate its platinum catalyst function upon contact with air, to allow addition reaction to take place, and to "cure not only at the air-contacting surface, but also to a deep section".

Accordingly, the invention provides an aerobic platinum catalyst mixture, a curable liquid silicone composition comprising the platinum catalyst mixture, a method of curing the curable liquid silicone composition, and a method of preparing the platinum catalyst mixture, as defined below.
[1] An aerobic platinum catalyst mixture comprising a reaction mixture of a platinum/alkenyl-containing organosiloxane complex and an organosilicon compound having at least one silicon-bonded hydrogen atom (i.e., SiH group) per molecule in such an amount as to provide a molar excess of the SiH group in the organosilicon compound relative to the alkenyl group in the complex.
[2] The platinum catalyst mixture of [1] wherein the platinum/alkenyl-containing organosiloxane complex is a complex of platinum, platinum chloride, chloroplatinic acid or chloroplatinic acid salt with a vinyl-containing siloxane.
[3] The platinum catalyst mixture of [2] wherein the vinyl-containing siloxane is 1 ,3-divinyl-1, 1 ,3,3-tetramethyldisiloxane.
[4] The platinum catalyst mixture of any one of [1] to [3] wherein the organosilicon compound having at least one silicon-bonded hydrogen atom is an organohydrogensilane or organohydrogensiloxane oligomer.
[5] The platinum catalyst mixture of any one of [1] to [4] wherein the organosilicon compound having at least one silicon-bonded hydrogen atom is at least one compound selected from among trialkoxy(hydrogen)silanes, alkyldialkoxy(hydrogen)silanes, dialkylalkoxy(hydrogen)silanes, 1,1,1,3,3-pentamethyldisiloxane, 1,1,3,3-tetramethyldisiloxane, 1,1,1,3,5,5,5-heptamethyltrisiloxane, 1,1,3,3,5,5-hexamethyltrisiloxane, 1,1,1,3,5,7,7,7-octamethyltetrasiloxane, 1,3,5,7-tetramethylcyclotetrasiloxane, and 1,3,5,7,9-pentamethylcyclopentasiloxane.
[6] The platinum catalyst mixture of any one of [1] to [4] wherein the organosilicon compound having at least one silicon-bonded hydrogen atom is an organohydrogensiloxane oligomer having at least two hydrogen atoms bonded to silicon atoms which adjoin each other via an oxygen atom to form a siloxane bond (Si-O-Si), i.e., SiH groups per molecule.
[7] A curable liquid silicone composition comprising
   (A) a diorganopolysiloxane having at least one alkenyl group per molecule,
   (B) an organohydrogenpolysiloxane having at least two silicon-bonded hydrogen atoms per molecule, in an amount to provide 0.5 to 4 moles of silicon-bonded hydrogen atom in component (B) per mole of alkenyl in component (A), and
   (C) the platinum catalyst mixture of any one of [1] to [6], in an amount to provide 0.1 to 1,000 ppm by weight of platinum in component (C) based on the total weight of components (A) and (B).
[8] The curable liquid silicone composition of [7], further comprising at least one component selected from (D) a dehydrating agent, (E) an addition reaction inhibitor, (F) an inorganic filler, (G) a tackifier, and (H) a plasticizer.
[9] The curable liquid silicone composition of [8] wherein the dehydrating agent (D) is a silyl ketene or α-silyl ester.
[10] The curable liquid silicone composition of [8] or [9] wherein the addition reaction inhibitor (E) is a phosphorous acid compound.
[11] The curable liquid silicone composition of any one of [7] to [10] which is a one-pack composition stored in a closed container.
[12] The curable liquid silicone composition of any one of [7] to [11] which is curable at room temperature.
[13] A method of curing the curable liquid silicone composition of any one of [7] to [12], comprising the step of exposing the composition to air at room temperature.
[14] A method of preparing a platinum catalyst mixture comprising the step of mixing a platinum/alkenyl-containing organosiloxane complex with an organosilicon compound having at least one silicon-bonded hydrogen atom (i.e., SiH group) per molecule in an oxygen-free atmosphere in such a mixing ratio as to provide a molar excess of the SiH group in the organosilicon compound relative to the alkenyl group in the complex, to form a reaction mixture.
[15] The method of preparing a platinum catalyst mixture of [14] wherein when the organosilicon compound having at least one silicon-bonded hydrogen atom is an organohydrogensiloxane oligomer having at least two hydrogen atoms bonded to silicon atoms which adjoin each other via an oxygen atom to form a siloxane bond (Si-O-Si), i.e., SiH groups per molecule,
   the method further comprising the step of mixing the reaction mixture (obtained by mixing in an oxygen-free atmosphere) in contact with water and/or oxygen.
[16] A method of preparing a platinum catalyst mixture comprising the step of mixing a platinum/alkenyl-containing organosiloxane complex with an organosilicon compound having at least one silicon-bonded hydrogen atom (i.e., SiH group) per molecule to form a reaction mixture, wherein
   the organosilicon compound having at least one silicon-bonded hydrogen atom (i.e., SiH group) per molecule is an organohydrogensiloxane oligomer having at least two hydrogen atoms bonded to silicon atoms which adjoin each other via an oxygen atom to form a siloxane bond (Si-O-Si), i.e., SiH groups per molecule, and
   the platinum/alkenyl-containing organosiloxane complex and the organosilicon compound having at least one silicon-bonded hydrogen atom (i.e., SiH group) per molecule are mixed in such a mixing ratio as to provide a molar excess of the SiH group in the organosilicon compound relative to the alkenyl group in the complex while they are kept in contact with water and/or oxygen.

### ADVANTAGEOUS EFFECTS OF INVENTION

Upon contact with airborne water (moisture) and/or oxygen, the platinum catalyst mixture of the invention is activated as a hydrosilylation addition reaction catalyst. The curable liquid silicone composition comprising the platinum catalyst mixture has "long-term one-pack storage stability in a closed container" sufficient for material storage and transportation at a temperature from refrigeration to room temperature. On use of the material, the aerobic platinum catalyst mixture in the composition is activated in unheated open conditions (that is, in contact with airborne water (or moisture) and/or oxygen at room temperature), hydrosilylation addition reaction takes place, and the composition quickly cures not only at the air-contacting surface, but also to a deep section. The curable liquid silicone composition (curable liquid silicone rubber composition or curable liquid silicone gel composition) of the invention contributes to the manufacture of various parts and articles meeting the energy saving and SDGs.

### DESCRIPTION OF EMBODIMENTS

The invention is described in detail.

### [Platinum catalyst mixture]

The platinum catalyst mixture of the invention is an aerobic catalyst consisting of a reaction mixture of a platinum/alkenyl-containing organosiloxane complex and an organosilicon compound having at least one silicon-bonded hydrogen atom (i.e., SiH group) per molecule in such an amount as to provide a molar excess of the SiH group in the organosilicon compound relative to the alkenyl group in the complex.

As used herein, the term "aerobic" refers to the property (aerobic reaction type) that the mixture has a low catalytic activity as a hydrosilylation addition reaction catalyst in an oxygen-free, low water content, closed state that shuts off any contact with water (moisture) and oxygen, but is activated as a hydrosilylation addition reaction catalyst upon contact with airborne water (moisture) and/or oxygen. Also, the term "closed state" refers to the state that shuts off any contact with air, i.e., shuts off any contact with water (moisture) and oxygen, and the closed container refers to a container capable of establishing the closed state. Also, the term "air" refers to air having an oxygen concentration of 21% by volume and a relative humidity (RH) of 5 to 100%, especially 10 to 100%. The term "oxygen-free" in a closed state refers to an oxygen concentration of up to 0.1% by volume, especially 0 to 0.05% by volume, and "low water content" refers to a relative humidity (RH) of up to 3%, especially 0 to 1%.

In the platinum catalyst mixture, preferred examples of the platinum/alkenyl-containing organosiloxane complex include complexes of platinum, platinum chloride, chloroplatinic acid or chloroplatinic acid salts with vinyl-containing siloxanes, e.g., organodisoloxane compounds having two alkenyl groups per molecule such as 1,3-divinyl-1,1,3,3-tetramethyldisiloxane. In case of the complex of chloroplatinic acid (H₂PtCl₆) with 1,3-divinyl-1,1,3,3-tetramethyldisiloxane, for example, three molecules of 1,3-divinyl-1,1,3,3-tetramethyldisiloxane, which is a bidentate ligand, coordinate to one molecule of chloroplatinic acid.

The platinum/alkenyl-containing organosiloxane complex is preferably used as a solution in a solvent such as toluene, lower alcohols, higher alcohols, or silicones. The solution preferably has a platinum atom content or concentration of 0.05 to 5% by weight.

In the platinum catalyst mixture, the organosilicon compound having at least one silicon-bonded hydrogen atom (i.e., SiH group) per molecule is preferably selected from organohydrogensilanes and organohydrogensiloxane oligomers having at least one SiH group, typically 1 to 10 SiH groups, preferably 1 to 5 SiH groups per molecule. From the aspects of ease of handling and safety, organohydrogensiloxane oligomers are more preferred. The molecular structure of organohydrogensiloxane oligomers may be linear or cyclic and the number of silicon atoms per molecule is preferably 2 to 40, more preferably 2 to 10, even more preferably 2 to 5.

Examples of the organohydrogensilanes and organohydrogensiloxane oligomers used herein include trialkoxy(hydrogen)silanes, alkyldialkoxy(hydrogen)silanes, dialkylalkoxy(hydrogen)silanes, 1,1,1,3,3-pentamethyldisiloxane, 1,1,3,3-tetramethyldisiloxane, 1,1,1,3,5,5,5-heptamethyltrisiloxane, 1,1,3,3,5,5-hexamethyltrisiloxane, 1,1,1,3,5,7,7,7-octamethyltetrasiloxane, 1,3,5,7-tetramethylcyclotetrasiloxane, and 1,3,5,7,9-pentamethylcyclopentasiloxane. One or more compounds selected from these exemplary compounds may be used.

The platinum catalyst mixture is a reaction mixture obtained by mixing a platinum/alkenyl-containing organosiloxane complex with an organosilicon compound having at least one silicon-bonded hydrogen atom (i.e., SiH group) per molecule, in which after the alkenyl group in the complex reacts with the SiH group in the organosilicon compound, which is added in a molar excess relative to the alkenyl group (that is, more than 1 mole, preferably 1.1 to 30 moles, more preferably 1.5 to 25 moles, even more preferably 5 to 25 moles of SiH group per mole of alkenyl group), in an oxygen-free atmosphere, all the alkenyl groups are converted to alkylene groups by hydrosilylation addition reaction (namely, the alkenyl groups substantially vanish), and SiH groups from the extra amount of the organosilicon compound remain in the mixture.

The following embodiment deserves special mention. When the organosilicon compound having at least one silicon-bonded hydrogen atom is an organohydrogensiloxane oligomer having at least two SiH groups (sometimes referred to as adjacent SiH groups, hereinafter), i.e., hydrogen atoms bonded to silicon atoms (sometimes referred to as adjacent silicon atoms, hereinafter) which adjoin each other via an ether oxygen atom to form a siloxane bond (Si-O-Si), for example, when the organosilicon compound is 1,1,3,3-tetramethyldisiloxane, 1,1,1,3,5,7,7,7-octamethyltetrasiloxane, 1,3,5,7-tetramethylcyclotetrasiloxane, or 1,3,5,7,9-pentamethylcyclopentasiloxane, the platinum catalyst mixture is preferably obtained by uniformly mixing the organohydrogensiloxane oligomer having at least two adjacent SiH groups with the platinum/alkenyl-containing organosiloxane complex in an oxygen-free atmosphere to form a reaction mixture and further mixing the reaction mixture in air to bring the reaction mixture in contact with water and/or oxygen, or the platinum catalyst mixture is preferably obtained by mixing the organosilicon compound having at least two adjacent SiH groups per molecule with the platinum/alkenyl-containing organosiloxane complex in such amounts as to provide a molar excess of the SiH group in the organosilicon compound relative to the alkenyl group in the complex to form a reaction mixture while they are kept in contact with water and/or oxygen. Then, the curable liquid silicone composition comprising the reaction mixture as a hydrosilylation addition reaction catalyst is further improved in long-term one-pack storage stability in a closed state without detracting from the curability of the composition in contact with airborne water (moisture) and/or oxygen. See, for instance, Examples 17, 21 and 22 to be described later.

The invention also provides a method of preparing the platinum catalyst mixture comprising the step of mixing the platinum/alkenyl-containing organosiloxane complex with the organosilicon compound having at least one silicon-bonded hydrogen atom (i.e., SiH group) per molecule in an oxygen-free atmosphere (e.g., in an oxygen-free, low water content, closed state that shuts off any contact with water (or moisture) and oxygen) in such a mixing ratio as to provide a molar excess of the SiH group in the organosilicon compound relative to the alkenyl group in the complex, to form a reaction mixture.

Such a mixing ratio as to provide a molar excess of the SiH group in the organosilicon compound relative to the alkenyl group in the platinum/alkenyl-containing organosiloxane complex means that the platinum/alkenyl-containing organosiloxane complex and the organosilicon compound are blended in such amounts as to provide more than 1 mole, preferably 1.1 to 30 moles, more preferably 1.5 to 25 moles, even more preferably 5 to 25 moles of SiH group in the organosilicon compound per mole of alkenyl group in the complex.

The mixing method is not particularly limited as long as the platinum/alkenyl-containing organosiloxane complex and the organosilicon compound having at least one silicon-bonded hydrogen atom (i.e., SiH group) per molecule are uniformly mixed. The mixing method is preferably conducted using, for example, a glass reactor such as glass flask or a stainless steel reactor.

The atmosphere of the mixing step is oxygen-free, preferably an atmosphere of inert gas such as nitrogen or in a reduced pressure or vacuum. The temperature of the mixing step may be room temperature (23°C±15°C) without need for heat. The mixing time or reaction time is set such that the platinum/alkenyl-containing organosiloxane complex and the organosilicon compound are mixed until uniform and for example, preferably 0.5 to 100 hours, more preferably 1 to 24 hours.

In one embodiment of the method of preparing the platinum catalyst mixture wherein the organosilicon compound having at least one silicon-bonded hydrogen atom is an organohydrogensiloxane oligomer having at least two silicon-bonded hydrogen atoms, i.e., hydrogen atoms bonded to silicon atoms which adjoin each other via an oxygen atom to form a siloxane bond (Si-O-Si) (for instance, the organosilicon compound is 1,1,3,3-tetramethyldisiloxane, 1,1,1,3,5,7,7,7-octamethyltetrasiloxane, 1,3,5,7-tetramethylcyclotetrasiloxane, or 1,3,5,7,9-pentamethylcyclopentasiloxane), the method preferably further comprises the step of mixing the reaction mixture, which is obtained by mixing in an oxygen-free atmosphere, in contact with water and/or oxygen. In this step, the reaction mixture is brought into contact with water and/or oxygen by such means as mixing in air. The time of mixing in air is preferably 0.5 to 100 hours, especially 1 to 12 hours. Thereafter, the platinum catalyst mixture is placed in a closed container.

In another embodiment of the method of preparing the platinum catalyst mixture by mixing a platinum/alkenyl-containing organosiloxane complex with an organosilicon compound having at least one silicon-bonded hydrogen atom (i.e., SiH group) per molecule to form a reaction mixture, when the organosilicon compound having at least one silicon-bonded hydrogen atom (i.e., SiH group) per molecule is an organohydrogensiloxane oligomer having at least two silicon-bonded hydrogen atoms (or adjacent SiH groups), i.e., hydrogen atoms bonded to silicon atoms which adjoin each other via an oxygen atom to form a siloxane bond (Si-O-Si), the platinum/alkenyl-containing organosiloxane complex and the organosilicon compound having at least one silicon-bonded hydrogen atom (i.e., SiH group) per molecule are mixed in such a mixing ratio as to provide a molar excess of the SiH group in the organosilicon compound relative to the alkenyl group in the complex while they are kept in contact with water and/or oxygen. In this step, the components are brought into contact with water and/or oxygen by such means as mixing in air. The time of mixing in air is preferably 0.5 to 100 hours, especially 1 to 12 hours. Thereafter, the platinum catalyst mixture is placed in a closed container.

As a result, the curable liquid silicone composition comprising the mixture as a hydrosilylation addition reaction catalyst is further improved in long-term one-pack storage stability in a closed state without detracting from the curability of the composition upon contact with airborne water (moisture) and/or oxygen.

Since the inventive platinum catalyst mixture is prepared in these ways, the platinum catalyst mixture has a low catalytic activity as a hydrosilylation addition reaction catalyst in a closed container which shuts off any contact with oxygen and has a low water content, but is activated to a high catalytic activity upon contact with airborne water (moisture) and/or oxygen. Accordingly, when the inventive platinum catalyst mixture is added to a curable liquid silicone composition of hydrosilylation addition reaction cure type as a curing catalyst, the curable liquid silicone composition develops satisfactory long-term one-pack storage stability at a refrigeration to normal temperature when it is placed and stored in a closed container which shuts off any contact with oxygen and has a low water content, but the platinum catalyst mixture is activated to a high catalytic activity when the closed container is opened to bring the composition in contact with airborne water (moisture) and/or oxygen at room temperature. Since crosslinking or curing reaction thus rapidly takes place via hydrosilylation addition reaction even under unheated conditions, the curable liquid silicone composition rapidly cures not only at the air-contacting surface, but also to a deep section and turns to rubber or gel.

### [Curable liquid silicone composition]

The invention further provides a curable liquid silicone composition (curable liquid silicone rubber composition or curable liquid silicone gel composition) comprising components (A) to (C) and optional other components to be described below.

### [(A) Alkenyl-containing diorganopolysiloxane]

Component (A) is an alkenyl-containing diorganopolysiloxane, i.e., a linear or branched diorganopolysiloxane having at least one alkenyl group, preferably at least two alkenyl groups per molecule. It serves as a main component or base polymer in the inventive curable liquid silicone composition. Most often, the diorganopolysiloxane is a linear diorganopolysiloxane typically having a backbone section composed of repeating diorganosiloxane units and blocked with a triorganosiloxy group at both ends of the molecular chain, although it may be a branched diorganopolysiloxane containing a branched structure in part of the siloxane structure of which the molecular chain is composed.

The alkenyl-containing diorganopolysiloxane as component (A) contains at least one (typically 1 to 50) alkenyl group, preferably 1 to 20 alkenyl groups, more preferably 1 to 10 alkenyl groups, most preferably 1 or 2 alkenyl groups per molecule. The alkenyl group is typically selected from alkenyl groups of 2 to 8 carbon atoms, for example, vinyl, allyl, propenyl, isopropenyl, butenyl, hexenyl and cyclohexenyl. The alkenyl group may be bonded to the silicon atom at the end of the molecular chain or a silicon atom at non-terminus or intermediate position of the molecular chain. The diorganopolysiloxane preferably contains at least an alkenyl group bonded to the silicon atom at the end (more preferably both ends) of the molecular chain. In this case, alkenyl groups may be positioned only at the both ends of the molecular chain or positioned at the both ends and non-terminus or intermediate positions of the molecular chain.

Exemplary of the alkenyl-containing diorganopolysiloxane is a linear diorganopolysiloxane having the general formula (1). 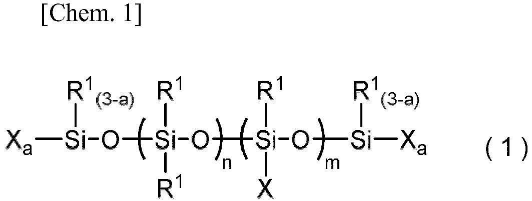 Herein R¹ is independently a substituted or unsubstituted monovalent hydrocarbon group free of aliphatic unsaturation. X is an alkenyl group, with at least one being contained per molecule. The subscript n is an integer of at least 0, m is an integer of at least 0, and "a" is an integer of 0 to 3 independently for each of the silicon atoms to which R¹ is bonded.

Examples of the substituted or unsubstituted monovalent hydrocarbon group free of aliphatic unsaturation, represented by R¹, include such groups of 1 to 12 carbon atoms, preferably 1 to 10 carbon atoms, more preferably 1 to 6 carbon atoms, for instance, alkyl groups such as methyl, ethyl, propyl, isopropyl, butyl, isobutyl, tert-butyl, pentyl, neopentyl, hexyl, heptyl, octyl, nonyl, decyl and dodecyl; cycloalkyl groups such as cyclopentyl, cyclohexyl and cycloheptyl; aryl groups such as phenyl, tolyl, xylyl, naphthyl and biphenylyl; aralkyl groups such as benzyl, phenylethyl, phenylpropyl, and methylbenzyl; and substituted forms of the foregoing groups in which some or all carbon-bonded hydrogen atoms are substituted by halogen atoms such as fluorine, chlorine and bromine, cyano or the like, specifically chloromethyl, 2-bromoethyl, 3-chloropropyl, 3,3,3-trifluoropropyl, chlorophenyl, fluorophenyl, cyanoethyl, and 3,3,4,4,5,5,6,6,6-nonafluorohexyl. Of these, preference is given to substituted or unsubstituted alkyl groups of 1 to 3 carbon atoms such as methyl, ethyl, propyl, chloromethyl, bromoethyl, 3,3,3-trifluoropropyl and cyanoethyl, and substituted or unsubstituted phenyl groups such as phenyl, chlorophenyl and fluorophenyl. Most preferably R¹ is methyl or phenyl.

Examples of the alkenyl group represented by X in formula (1) include those of 2 to 8 carbon atoms such as vinyl, allyl, propenyl, isopropenyl, butenyl, hexenyl, and cyclohexenyl. Inter alia, lower alkenyl groups such as vinyl and allyl are preferred.

In formula (1), n is an integer of at least 0, preferably 10 to 2,000, more preferably 50 to 1,200; m is an integer of at least 0, preferably 0 to 40, more preferably 0 to 20; and preferably n and m are integers meeting 10 ≤ n+m ≤ 2,000, more preferably 50 ≤ n+m ≤ 1,200 and 0 ≤ m/(n+m) ≤ 0.2. The units in parentheses with subscripts n and m may be randomly arranged.

In formula (1), "a" is an integer of 0 to 3, preferably 1 to 3, independently for each of the silicon atoms to which R¹ is bonded.

The alkenyl-containing diorganopolysiloxane preferably has a viscosity at 23°C of about 10 to about 1,000,000 mPa·s, especially about 100 to about 500,000 mPa·s.

It is noted that the number of repetition of diorganosiloxane units per molecule (or degree of polymerization) is typically determined as a number average molecular weight (or number average degree of polymerization) measured by gel permeation chromatography (GPC) versus polystyrene standards using toluene or the like as a developing solvent. The viscosity is typically measured at 23°C by a rotational viscometer, e.g., BL, BH, BS or cone-and-plate viscometer or rheometer.

The alkenyl-containing diorganopolysiloxane as component (A) may be used alone or in admixture of two or more. In order to avoid damaging the function of the platinum catalyst mixture as component (C), it is recommended that the alkenyl-containing diorganopolysiloxane as component (A) is previously treated to reduce its oxygen and water contents before it is blended in the composition. Such treatment may be carried out, for example, by purging with an inert gas such as nitrogen gas, heating, vacuuming or combination thereof.

### [(B) Organohydrogenpolysiloxane]

Component (B) is an organohydrogenpolysiloxane of linear, cyclic, branched or three-dimensional network structure having at least two silicon-bonded hydrogen atoms (i.e., SiH groups) per molecule. It functions as a curing agent or crosslinking agent for the curable liquid silicone composition.

The organohydrogenpolysiloxane as component (B) functions as a crosslinking agent or curing agent for the inventive composition. It has at least two (typically 2 to about 200), preferably 3 to about 100 silicon-bonded hydrogen atoms (i.e., SiH groups) per molecule and may be of linear, branched, cyclic or three-dimensional network (or resinous) structure.

Typical of the organohydrogenpolysiloxane is an organohydrogenpolysiloxane having the average compositional formula (2):

H_{b}R²_{c}SiO_{(4-b-c)/2} (2)

wherein R² is independently a substituted or unsubstituted monovalent hydrocarbon group free of aliphatic unsaturation, b and c are numbers in the range: 0.001 ≤ b ≤ 1.2, 0.8 ≤ c ≤ 2, and 0.8 < b+c ≤ 3, preferably 0.05 ≤ b ≤ 1, 1.5 ≤ c ≤ 2, and 1.8 ≤ b+c ≤ 2.7.

Examples of the substituted or unsubstituted monovalent hydrocarbon group free of aliphatic unsaturation, represented by R², include such groups of 1 to 12 carbon atoms, preferably 1 to 10 carbon atoms, more preferably 1 to 7 carbon atoms, as exemplified above for R¹ in formula (1). Inter alia, lower alkyl groups of 1 to 3 carbon atoms such as methyl and 3,3,3-trifluoropropyl, and phenyl are more preferred.

As component (B), organohydrogenpolysiloxanes in which the number of silicon atoms per molecule is 2 to 300, preferably 2 to 150, more preferably 2 to 100 and which are liquid at room temperature are preferably used. The silicon-bonded hydrogen atom may be positioned at the end of the molecular chain or at a non-terminus or intermediate position of the molecular chain or both.

Examples of the organohydrogenpolysiloxane include methylhydrogencyclosiloxane oligomers such as 1,1,3,3-tetramethyldisiloxane, 1,1,3,3,5,5-hexamethyltrisiloxane, 1,3,5,7-tetramethyltetracyclosiloxane, and 1,3,5,7,9-pentamethylpentacyclosiloxane; tris(dimethylhydrogensiloxy)methylsilane, tris(dimethylhydrogensiloxy)phenylsilane, molecular chain both end trimethylsiloxy-blocked methylhydrogenpolysiloxane, molecular chain both end trimethylsiloxy-blocked dimethylsiloxane/methylhydrogensiloxane copolymers, molecular chain both end trimethylsiloxy-blocked diphenylsiloxane/methylhydrogensiloxane copolymers, molecular chain both end trimethylsiloxy-blocked methylphenylsiloxane/methylhydrogensiloxane copolymers, molecular chain both end trimethylsiloxy-blocked dimethylsiloxane/diphenylsiloxane/methylhydrogensiloxane copolymers, molecular chain both end dimethylhydrogensiloxy-blocked dimethylpolysiloxane, molecular chain both end dimethylhydrogensiloxy-blocked methylhydrogenpolysiloxane, molecular chain both end dimethylhydrogensiloxy-blocked dimethylsiloxane/methylhydrogensiloxane copolymers, molecular chain both end dimethylhydrogensiloxy-blocked diphenylsiloxane/methylhydrogensiloxane copolymers, molecular chain both end dimethylhydrogensiloxy-blocked methylphenylsiloxane/methylhydrogensiloxane copolymers, molecular chain both end dimethylhydrogensiloxy-blocked dimethylsiloxane/diphenylsiloxane/methylhydrogensiloxane copolymers, silicone resins of three-dimensional network structure composed of dimethylhydrogensiloxy units and SiO_{4/2} units and optionally containing trimethylsiloxy units, dimethylsiloxane units, methylhydrogensiloxane units, hydrogensilsesquioxane units and/or methylsilsesquioxane units, and substituted forms of the foregoing compounds in which some or all methyl groups are substituted by other alkyl groups or phenyl groups. It is noted that component (B) and the organosilicon compound in component (C) to be described later may be the same.

The organohydrogenpolysiloxane used herein may be obtained by any well-known methods, for example, by hydrolyzing at least one chlorosilane selected from those of the general formulae: R²SiHCl₂ and R²₂SiHCl wherein R² is as defined above or co-hydrolyzing a mixture of the above chlorosilane and at least one chlorosilane selected from those of the general formulae: R²₃SiCl and R²₂SiCl₂ wherein R² is as defined above. The organohydrogenpolysiloxane may also be one obtained from further equilibration of the polysiloxane produced by co-hydrolysis.

From the aspect of curing into satisfactory silicone rubber or gel, the amount of the organohydrogenpolysiloxane blended as component (B) is determined so as to provide 0.5 to 4 moles, preferably 0.8 to 2.5 moles of silicon-bonded hydrogen (i.e., SiH group) in the organohydrogenpolysiloxane as component (B) per mole of alkenyl group in the alkenyl-containing diorganopolysiloxane as component (A).

The organohydrogenpolysiloxane as component (B) may be used alone or in admixture of two or more. In order to avoid damaging the function of the aerobic platinum catalyst mixture as component (C), it is recommended that the organohydrogenpolysiloxane as component (B) is previously treated to reduce its oxygen and water contents before it is blended in the composition. Such treatment may be carried out, for example, by purging with an inert gas such as nitrogen gas, heating, vacuuming or combination thereof.

### [(C) Platinum catalyst mixture]

The inventive curable liquid silicone composition is characterized in that the platinum catalyst mixture is blended as a platinum catalyst (C) for promoting hydrosilylation addition reaction of the alkenyl group in component (A) and the silicon-bonded hydrogen (i.e., SiH group) in component (B).

In the curable liquid silicone composition, the amount of the platinum catalyst mixture as component (C) is a catalytic amount, specifically such an amount as to provide 0.1 to 1,000 ppm, preferably 0.5 to 200 ppm by weight of platinum in component (C) based on the total weight of components (A) and (B). If the amount of component (C) is less than the range, the composition on use is under-cured due to the influence of a catalyst-inhibitory factor. If the amount of component (C) is more than the range, the composition loses storage stability. Since the amount of component (C) blended is a catalytic amount, the amount of the SiH group (used in molar excess) remaining in component (C) is as minute as negligible and gives no substantial influence on the molar ratio of SiH group in component (B) to alkenyl group in component (A).

### [Other components]

Besides the foregoing components (A) to (C), various optional components as mentioned below may be added to the curable liquid silicone composition as long as the benefits of the invention are not impaired.

### [(D) Dehydrating agent]

Component (D) which is a dehydrating agent may be blended in the curable liquid silicone composition as an optional component if necessary for removing water in the composition. By blending the dehydrating agent as component (D), the composition is given better storage stability.

As mentioned above, the platinum catalyst mixture as component (D) which is the essence of the invention has a low catalytic activity in an oxygen-free, low water content environment that shuts off any contact with water (moisture) and oxygen, but is adapted to activate its catalytic function upon contact with airborne or otherwise carried over water and/or oxygen (classified as aerobic reaction type). It is thus confirmed that the curable liquid silicone composition is improved in one-pack storage stability by reducing the water contents of various components and the water content of the composition. It is thus effective for establishing one-pack storage stability to provide the composition, which is stored in a closed container, with means (or dehydrating means) for consuming water originating from components and a trace of water entering from without the container.

The compound capable of dehydration may be inorganic or organic as long as it does not impair the function of components (A), (B) and (C). Some dehydrating compounds yield by-products through dehydrating reaction, the by-products causing foaming. Many dehydrating compounds incur decomposition of the hydrogensiloxane in the composition or cause a lowering of the catalytic activity of the platinum catalyst mixture.

As the dehydrating agent or component (D), silyl ketenes (inclusive of silyl ketene acetals), silyl enol esters, and α-silyl esters are preferred because of efficient removal of water from within the system. Since by-products resulting from these compounds during water removal have the structure that does not impair the function of components (A), (B) and (C) and are soluble in the liquid silicone composition, the resulting liquid silicone composition is stable and curable. Inter alia, since the silyl ketenes (inclusive of silyl ketene acetals) and α-silyl esters allow dehydrating reaction to proceed under non-basic conditions, they do not incur decomposition of the hydrogensiloxane or cause a lowering of catalytic activity of the platinum catalyst mixture.

Examples of the silyl ketene (inclusive of silyl ketene acetal) include 1-methoxy-2-methyl-1-(trimethylsiloxy)propene, dimethyl ketene trimethylsilyl acetal, and tert-butoxy-1-(trimethylsiloxy)propene.

Examples of the α-silyl ester include ethyl 2-(trimethoxysilyl)propionate (ECMS) and octyl 2-(methyldimethoxysilyl)propionate (OCMS-2).

The dehydrating agent as component (D) may be previously added to any of the components, added during preparation of the composition, or post-added to the prepared composition. Its amount is preferably up to 5% by weight, more preferably up to 2% by weight of the overall composition.

Also, a catalyst for promoting reaction of component (D) with water may be added. Suitable catalysts include titanic esters such as tetra(isopropyl) titanate (TPT), tetrabutyl titanate (TBT), and tetra(2-ethylhexyl) titanate (TOT), titanium chelates such as titanium diisopropoxybis(ethylacetoacetate) and titanium tetraacetylacetonate, and tin compounds such as dibutyl dimethoxytin and dibutyltin dilaurate. The amount of the catalyst added is preferably up to 2% by weight, more preferably up to 1% by weight of the overall composition.

### [(E) Addition reaction inhibitor]

It is also effective that an addition reaction inhibitor as component (E) is blended in the curable liquid silicone composition as an optional component, if necessary for the purpose of improving the one-pack storage stability like the dehydrating agent as component (D).

As mentioned above, the platinum catalyst mixture as component (D) which is the essence of the invention is adapted to activate its catalytic function upon contact with water. For this reason, with water which can be introduced in the step of preparing the composition or the step of filling a container with the composition or with water which can enter from without the closed container, sometimes a portion of the platinum catalyst mixture as component (D) is activated as the addition reaction catalyst. Although the partially activated catalyst suggests a possibility that the composition experiences a substantial loss of one-pack storage stability, supplemental blending of the addition reaction inhibitor as component (E) is effective for restraining such a loss of one-pack storage stability.

Examples of the addition reaction inhibitor as component (E) include acetylene alcohols such as 1-ethynyl cyclohexanol and 3-methyltridec-1-yn-3-ol (EMDC); silane or siloxane-modified products of acetylene alcohols such as dimethylbis(1,1-dimethyl-2-propionyloxy)silane (PLR-22) and 3-(trimethylsilyloxy)-3-methyl-1-butyne (PLR-31); phosphorous acid compounds, especially phosphorous esters such as tri(isopropyl) phosphite, tris(di-tert-butylphenyl) phosphite, triphenyl phosphite, and tris(2-ethylhexyl) phosphite; ethylenediamines such as tetramethylethylenediamine; benzotriazoles such as benzotriazole and 5-methyl-1H-benzotriazole; and mixtures thereof. In particular, phosphorous acid compounds, especially phosphorous esters such as tri(isopropyl) phosphite and tris(di-tert-butylphenyl) phosphite are preferred because the resulting curable liquid silicone composition has satisfactory one-pack storage stability in a closed state.

The amount of the addition reaction inhibitor added as component (E) is arbitrary in accordance with its capability insofar as the curability of the composition is not affected. In case of phosphorous acid compounds, typically phosphorous esters, the addition amount may be a minor amount, typically less than 1 mole, especially 0 to about 0.75 mole per mole of platinum atom in the composition. If the amount of component (E) added is too large, component (E) can deactivate the platinum catalyst mixture (C) which has been activated by water during service, with the risk of losing the curability upon opening to air.

### [(F) Inorganic filler]

An inorganic filler as component (F) may be blended in the curable liquid silicone composition as an optional component if necessary for the purposes of adjusting the viscosity of uncured composition, enhancing the strength of cured composition, that is, silicone rubber or gel cured product, and adjusting the outer appearance color. Examples of the inorganic filler as component (F) include reinforcing inorganic fillers such as fumed silica and fumed titanium dioxide; and non-reinforcing inorganic fillers such as calcium silicate, titanium dioxide, ferric oxide, and carbon black.

The amount of the inorganic filler as component (F) is typically up to 200 parts by weight per 100 parts by weight of component (A). When blended, the amount is preferably 0.1 to 200 parts by weight, more preferably 0.5 to 50 parts by weight per 100 parts by weight of component (A). Less than 0.1 part by weight of the inorganic filler may fail to exert an addition effect whereas more than 200 parts by weight makes it difficult to mix the overall mixture uniformly.

### [(G) Tackifier]

In the application requiring high self-adhesion, a tackifier as component (G) may be blended in the curable liquid silicone composition as an optional component if necessary for the purpose of improving the adhesion of the cured composition to various substrates. Suitable tackifiers include hydrolyzable organosilane compounds (so-called carbon functional silanes or silane coupling agents) and/or partial hydrolytic condensates thereof, for example, alkoxysilanes containing a monovalent hydrocarbon group having a functional group (e.g., epoxy, (meth)acryloxy or mercapto group) containing a heteroatom selected from oxygen, nitrogen and sulfur.

When used, the amount of the tackifier blended as component (G) is preferably 0.1 to 20 parts by weight, more preferably 0.2 to 10 parts by weight per 100 parts by weight of component (A). Less than 0.1 part by weight of the tackifier may achieve insufficient adhesion development whereas more than 20 parts by weight may lead to an extreme drop of material viscosity.

### [(H) Plasticizer]

A plasticizer as component (H) may be blended in the curable liquid silicone composition as an optional component if necessary for the purpose of adjusting the viscosity of the composition or the hardness of the cured product. Suitable plasticizers include so-called non-functional silicone oils, for example, compounds which do not contain a functional group participating in hydrosilylation addition reaction, e.g., alkenyl group or hydrosilyl group (SiH group) in the molecule, such as molecular chain both end trimethylsilyl-blocked dimethylpolysiloxane (dimethylsilicone oil), molecular chain both end trimethylsilyl-blocked dimethylsiloxane/diphenylsiloxane copolymers, and molecular chain both end trimethylsilyl-blocked dimethylsiloxane/methylphenylsiloxane copolymers (methylphenylsilicone oil).

When used, the amount of the plasticizer blended as component (H) is preferably 0.1 to 50 parts by weight, more preferably 0.5 to 20 parts by weight per 100 parts by weight of component (A). Less than 0.1 part by weight of the plasticizer (or non-functional silicone oil) may fail to attain the purpose, plasticization. If the amount is more than 50 parts by weight, sometimes the plasticizer separates from or bleeds out of the cured composition.

Besides the foregoing optional components including dehydrating agent (D), addition reaction inhibitor (E), inorganic filler (F), tackifier (G) and plasticizer (H), another optional component may be blended in the curable liquid silicone composition if necessary. For example, additives such as pigment pastes using as a binder a component similar to the non-functional silicone oil as the plasticizer and reinforcing silicone resins may be blended as the other optional component.

The curable liquid silicone composition develops superior one-pack storage stability when a container of tight closure capable of shutting off or reducing the entry of airborne water (moisture) and/or oxygen is used, and the composition is stored in the closed container, which is subject to distribution and sales. Further, when the closed container is opened to expose the composition to air, whereby the composition is brought in contact with airborne water (moisture) and/or oxygen at room temperature, the curable liquid silicone composition rapidly cures not only at the air-contacting surface, but also to a deep section into a silicone rubber or gel cured product.

### (Method of curing the curable liquid silicone composition)

The invention further provides a method of curing the curable liquid silicone composition, comprising the step of exposing the composition to air at room temperature.

When the curable liquid silicone composition is exposed to air, airborne water (moisture) and/or oxygen comes in contact with the platinum catalyst mixture as component (C) in the composition. Then the platinum catalyst mixture is activated to exert a catalytic function, and the curable liquid silicone composition starts curing even at room temperature. At this point of time, the composition rapidly cures not only at the air-contacting surface, but also to a deep section, yielding a silicone rubber or gel cured product.

Since the silicone rubber and gel which are the cured products of the curable liquid silicone composition have excellent heat resistance and electrical insulation, they are applicable as parts to be mounted on vehicles, aircraft and electric appliances.

### EXAMPLES

Examples and Comparative Examples are given below for illustrating the invention although the invention is not limited thereto. The viscosity is measured at 23°C by a rotational viscometer. The degree of polymerization (DOP) is a number average DOP as measured by GPC versus polystyrene standards using toluene as developing solvent. Me stands for methyl and Vi for vinyl. "Room temperature" (RT) is 23°C. "Air" has an oxygen concentration of 21% by volume and a relative humidity (RH) of 50%.

### [Preparation Examples 1 to 9] Preparation of platinum catalyst mixture

Aerobic platinum catalyst mixtures (C-1) to (C-9) were prepared by the following procedure.

Herein, a toluene solution of chloroplatinic acid-divinyltetramethyldisiloxane complex (C-a) having a platinum atom content of 0.5% by weight was used as the platinum/alkenyl-containing organosiloxane complex.

Organohydrogenpolysiloxanes (C-b-1) to (C-b-4) were used as the organosilicon compound having at least one silicon-bonded hydrogen atom. (C-b-2) and (C-b-4) are organohydrogenpolysiloxanes having adjacent SiH groups in the molecule. (C-b-1) 1,1,1,3,3-pentamethyldisiloxane (C-b-2) 1,1,3,3-tetramethyldisiloxane (having adjacent SiH groups) (C-b-3) 1,1,1,3,5,5,5-heptamethyltrisiloxane (C-b-4) 1,3,5,7-tetramethylcyclotetrasiloxane (having adjacent SiH groups)

### (Preparation procedure)

In nitrogen atmosphere at RT (23°C), platinum/alkenyl-containing organosiloxane complex (C-a) and organohydrogenpolysiloxanes (C-b-1) to (C-b-4) were combined in the blending ratio shown in Table 1 and uniformly mixed in a 25-g glass bottle over 12 hours for reaction. The bottle was then closed. In this way, aerobic platinum catalyst mixtures (C-1), (C-3), (C-5) and (C-7) were prepared.

For each of the mixtures in 25-g glass bottles prepared as mixtures (C-1), (C-3), (C-5) and (C-7), the lid of the glass bottle was opened in air at RT (23°C). The mixture was uniformly mixed for 2 hours while kept in contact with air. The bottle was then closed. In this way, aerobic platinum catalyst mixtures (C-2), (C-4), (C-6) and (C-8) were prepared.

Additionally, two components of the same composition as (C-3), that is, platinum/alkenyl-containing organosiloxane complex (C-a) and organohydrogenpolysiloxane (C-b-2) were mixed in a glass bottle for 12 hours in air. The glass bottle containing air was closed without evacuation. In this way, aerobic platinum catalyst mixture (C-9) was prepared.

**[Table 1]**

| Platinum catalyst mixture | | C-1 | C-2 | C-3 | C-4 | C-5 | C-6 | C-7 | C-8 | C-9 |
|---|---|---|---|---|---|---|---|---|---|---|
| Platinum/ alkenyl-containing organosiloxane complex | C-a | 8.0 g | 8.0 g | 8.0 g | 8.0 g | 8.0 g | 8.0 g | 8.0 g | 8.0 g | 8.0 g |
| Organohydrogen polysiloxane | C-b-1 | 2.0 g | 2.0 g | | | | | | | |
| | C-b-2 | | | 2.0 g | 2.0 g | | | | | 2.0 g |
| | C-b-3 | | | | | 2.0 g | 2.0 g | | | |
| | C-b-4 | | | | | | | 2.0 g | 2.0 g | |
| (SiH_{C-b})/(Vi_{C-a}) molar ratio | | 9.7 | 9.7 | 21.4 | 21.4 | 6.5 | 6.5 | 23.9 | 23.9 | 21.4 |
| Air contact mixing | | No | Yes | No | Yes | No | Yes | No | Yes | Yes |
| Mixture appearance | | deep brown | black | deep brown | green transparent | deep brown | black | orange | orange | green transparent |

### [Examples 1 to 22 and Comparative Examples 1 to 3]

Curable liquid silicone compositions were prepared by the following procedure.

### (Preparation of curable liquid silicone composition)

In nitrogen atmosphere at RT (23°C), the amounts shown in Tables 2 and 3 of components were uniformly mixed in a glass bottle. By sealing in the glass bottle, each composition was prepared. Notably, the molar ratio of SiH group in component (B) to vinyl group in component (A) is 2.2 for the formulation shown in Table 2 and 1.2 for the formulation shown in Table 3.

The composition was prepared by adding the alkenyl-containing diorganopolysiloxane (A), organohydrogenpolysiloxane (B), dehydrating agent (D), addition reaction inhibitor (E), and aerobic platinum catalyst mixture (C) in the described order while mixing. If a certain component was not added, the order was skipped, followed by the addition of subsequent components.

To prepare the composition in a reproducible manner, the alkenyl-containing diorganopolysiloxane (A) and organohydrogenpolysiloxane (B) were used after water removal by vacuum deaeration in a glass flask at 120°C. The steps of mixing components and placing the composition in a container were performed in nitrogen atmosphere.

The components are identified below.
(A) Alkenyl-containing diorganopolysiloxane
   (A-1) Vinyl-containing linear diorganopolysiloxane of the following average formula having a viscosity of 5,000 mPa·s at 23°C

      Vi(Me)₂SiO-(Si(Me)₂O)₃₀₀-Si(Me)₂Vi
   (A-2) Vinyl-containing linear diorganopolysiloxane of the following average formula having a viscosity of 800 mPa-s at 23°C

      [Vi(Me)₂SiO]_{1.2}-(Si(Me)₂O)₁₀₀-[Si(Me)₃]_{0.8}
(B) Organohydrogenpolysiloxane
   (B-1) Linear organohydrogenpolysiloxane of the following average formula

      (Me)₃SiO-(Si(Me)₂O)₆₃-(Si(H)(Me)O)₂₀-Si(Me)₃
(C) Aerobic platinum catalyst mixture
   Aerobic platinum catalyst mixtures (C-1) to (C-9) prepared in Preparation Examples 1 to 9 were used. The toluene solution of chloroplatinic acid-divinyltetramethyldisiloxane complex (C-a) having a platinum atom content of 0.5% by weight, used as the intermediate in the preparation of a platinum catalyst mixture, was used as comparative component (C').
(D) Dehydrating agent
   (D-1) Ethyl 2-(trimethylsilyl)propionate (ECMS) (α-silylester)
   (D-2) 1-methoxy-2-methyl-1-(trimethylsiloxy)propene of the following formula (silyl ketene acetal) 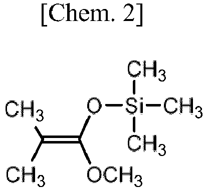
   (D') If necessary, tetra(isopropyl) titanate (TPT) was added as a catalyst for promoting the reaction of component (D) with water.
(E) Addition reaction inhibitor
   (E-1) Tri(isopropyl) phosphite (0.10 wt% toluene solution)
   (E-2) Tris(di-tert-butylphenyl) phosphite of the following formula (0.31 wt% toluene solution)

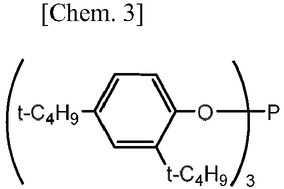

The curable liquid silicone compositions thus prepared were evaluated for one-pack storage stability in a closed state, curability in RT/air exposure after storage (RT curability), and hardness of cured products by the following tests.

The one-pack storage stability was evaluated by placing the curable liquid silicone composition in a glass bottle in nitrogen atmosphere, closing the bottle, holding the bottle in air and RT, and observing the viscosity buildup or gelation behavior of the composition. With respect to the viscosity buildup or gelation behavior of the composition, when the glass bottle was tilted, it was observed how the composition in the glass bottle flowed in accordance with the tilt angle (i.e., fluidity). When the fluidity becomes worse than immediately after bottle closure, it was judged that the curable liquid silicone composition built up its viscosity or gelled. After the glass bottle in which the curable liquid silicone composition was closed was held in air/RT, the composition was observed first in 5 minutes and then at intervals of 1 day. The duration of time (minutes or days) until the curable liquid silicone composition built up its viscosity or gelled was observed.

For RT curability, the curable liquid silicone composition which had been stored in a glass bottle for 1 day in a closed state was taken out and placed in another container (depth 4 mm) in nitrogen atmosphere, and exposed in air/RT environment. The time passed until the composition cured into a rubber or gel was reported as curing time. Also, deep-section cure was confirmed by inserting a needle within the container.

The hardness of a cured product was determined by casting the curable liquid silicone rubber composition immediately after preparation into a glass dish, exposing the composition in air/RT environment for 24 hours, thus obtaining a cured product. For a rubbery cured product, hardness according to JIS K 6249 (Durometer type A hardness) was measured. For a gel cured product, penetration according to JIS K 6249 (viscosity of 1/4 cone according to JIS K 2220) was measured.

The results are shown in Tables 2 and 3.

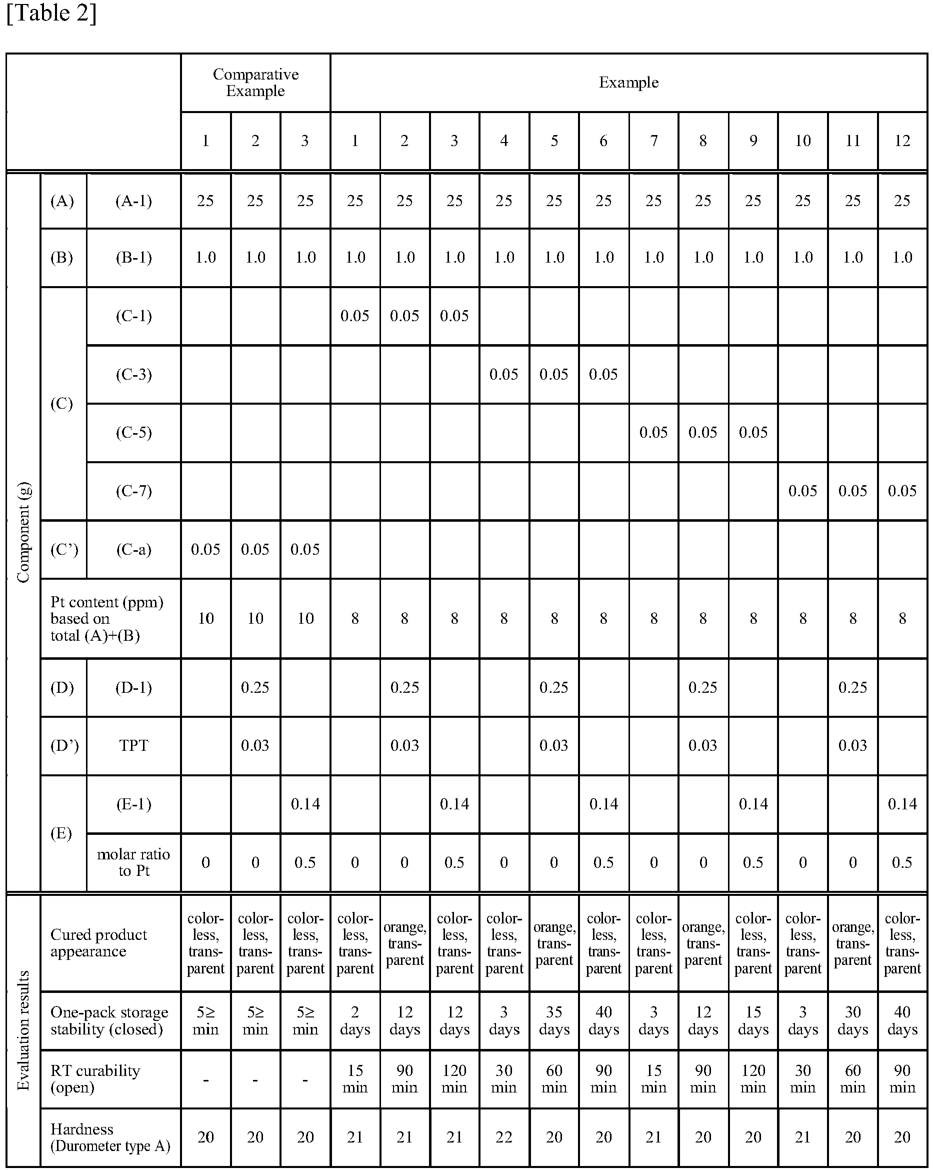

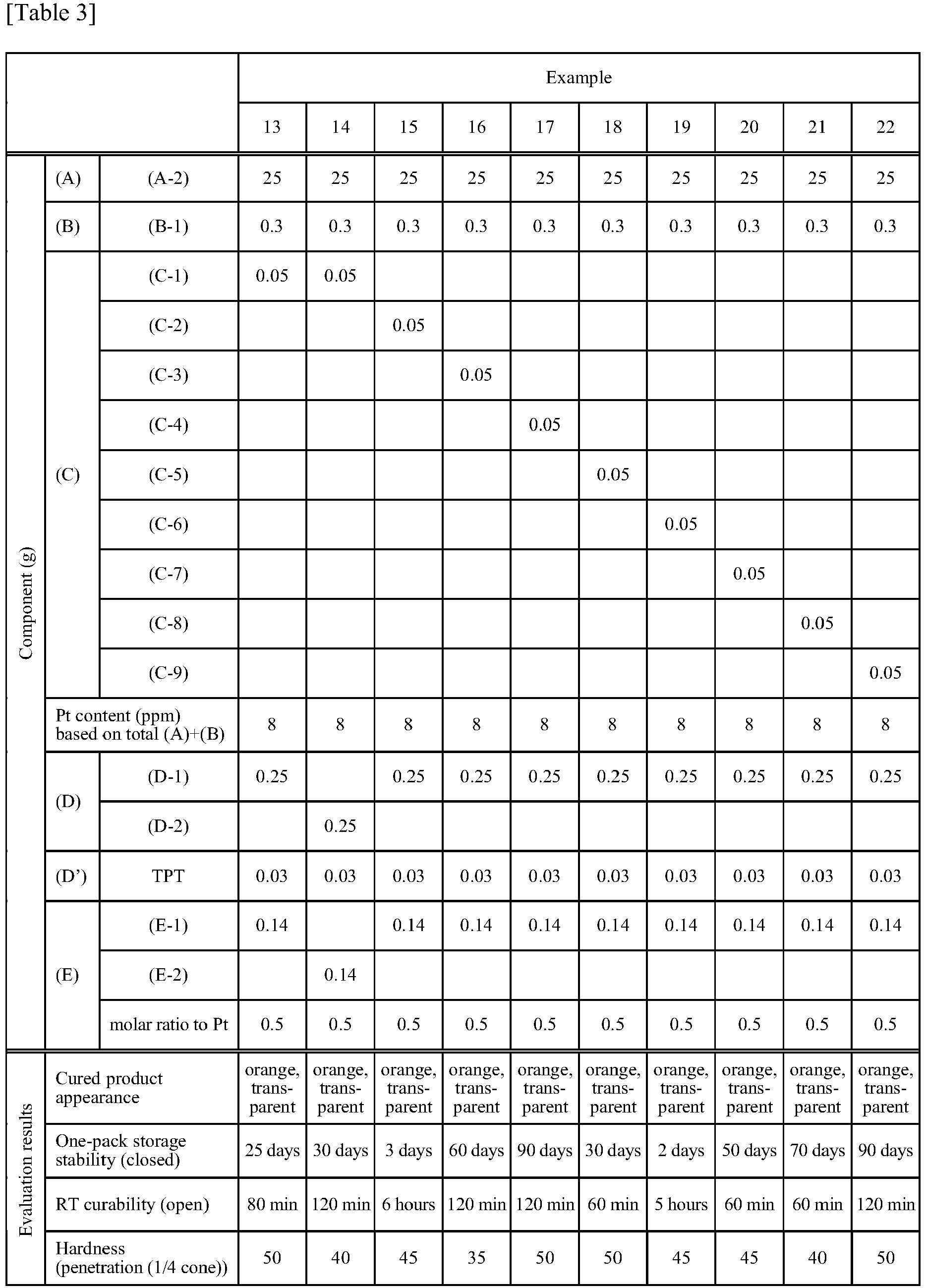

As seen from the above results, the curable liquid silicone composition within the scope of the invention has satisfactory one-pack storage stability in a closed container. When the composition is brought in contact with air in unheated open conditions (RT in air), the platinum catalyst mixture is activated, helping addition reaction to take place and the composition to cure into a rubber or gel product.

## Claims

1. An aerobic platinum catalyst mixture comprising a reaction mixture of a platinum/alkenyl-containing organosiloxane complex and an organosilicon compound having at least one silicon-bonded hydrogen atom (i.e., SiH group) per molecule in such an amount as to provide a molar excess of the SiH group in the organosilicon compound relative to the alkenyl group in the complex.

2. The platinum catalyst mixture of claim 1 wherein the platinum/alkenyl-containing organosiloxane complex is a complex of platinum, platinum chloride, chloroplatinic acid or chloroplatinic acid salt with a vinyl-containing siloxane.

3. The platinum catalyst mixture of claim 2 wherein the vinyl-containing siloxane is 1,3-divinyl-1,1,3,3-tetramethyldisiloxane.

4. The platinum catalyst mixture of any one of claims 1 to 3 wherein the organosilicon compound having at least one silicon-bonded hydrogen atom is an organohydrogensilane or organohydrogensiloxane oligomer.

5. The platinum catalyst mixture of any one of claims 1 to 4 wherein the organosilicon compound having at least one silicon-bonded hydrogen atom is at least one compound selected from among trialkoxy(hydrogen)silanes, alkyldialkoxy(hydrogen)silanes, dialkylalkoxy(hydrogen)silanes, 1,1,1,3,3-pentamethyldisiloxane, 1,1,3,3-tetramethyldisiloxane, 1,1,1,3,5,5,5-heptamethyltrisiloxane, 1,1,3,3,5,5-hexamethyltrisiloxane, 1,1,1,3,5,7,7,7-octamethyltetrasiloxane, 1,3,5,7-tetramethylcyclotetrasiloxane, and 1,3,5,7,9-pentamethylcyclopentasiloxane.

6. The platinum catalyst mixture of any one of claims 1 to 4 wherein the organosilicon compound having at least one silicon-bonded hydrogen atom is an organohydrogensiloxane oligomer having at least two hydrogen atoms bonded to silicon atoms which adjoin each other via an oxygen atom to form a siloxane bond (Si-O-Si), i.e., SiH groups per molecule.

7. A curable liquid silicone composition comprising
(A) a diorganopolysiloxane having at least one alkenyl group per molecule,
(B) an organohydrogenpolysiloxane having at least two silicon-bonded hydrogen atoms per molecule, in an amount to provide 0.5 to 4 moles of silicon-bonded hydrogen atom in component (B) per mole of alkenyl in component (A), and
(C) the platinum catalyst mixture of any one of claims 1 to 6, in an amount to provide 0.1 to 1,000 ppm by weight of platinum in component (C) based on the total weight of components (A) and (B).

8. The curable liquid silicone composition of claim 7, further comprising at least one component selected from (D) a dehydrating agent, (E) an addition reaction inhibitor, (F) an inorganic filler, (G) a tackifier, and (H) a plasticizer.

9. The curable liquid silicone composition of claim 8 wherein the dehydrating agent (D) is a silyl ketene or α-silyl ester.

10. The curable liquid silicone composition of claim 8 or 9 wherein the addition reaction inhibitor (E) is a phosphorous acid compound.

11. The curable liquid silicone composition of any one of claims 7 to 10 which is a one-pack composition stored in a closed container.

12. The curable liquid silicone composition of any one of claims 7 to 11 which is curable at room temperature.

13. A method of curing the curable liquid silicone composition of any one of claims 7 to 12, comprising the step of exposing the composition to air at room temperature.

14. A method of preparing a platinum catalyst mixture comprising the step of mixing a platinum/alkenyl-containing organosiloxane complex with an organosilicon compound having at least one silicon-bonded hydrogen atom (i.e., SiH group) per molecule in an oxygen-free atmosphere in such a mixing ratio as to provide a molar excess of the SiH group in the organosilicon compound relative to the alkenyl group in the complex, to form a reaction mixture.

15. The method of preparing a platinum catalyst mixture of claim 14 wherein when the organosilicon compound having at least one silicon-bonded hydrogen atom is an organohydrogensiloxane oligomer having at least two hydrogen atoms bonded to silicon atoms which adjoin each other via an oxygen atom to form a siloxane bond (Si-O-Si), i.e., SiH groups per molecule,
the method further comprising the step of mixing the reaction mixture (obtained by mixing in an oxygen-free atmosphere) in contact with water and/or oxygen.

16. A method of preparing a platinum catalyst mixture comprising the step of mixing a platinum/alkenyl-containing organosiloxane complex with an organosilicon compound having at least one silicon-bonded hydrogen atom (i.e., SiH group) per molecule to form a reaction mixture, wherein
the organosilicon compound having at least one silicon-bonded hydrogen atom (i.e., SiH group) per molecule is an organohydrogensiloxane oligomer having at least two hydrogen atoms bonded to silicon atoms which adjoin each other via an oxygen atom to form a siloxane bond (Si-O-Si), i.e., SiH groups per molecule, and
the platinum/alkenyl-containing organosiloxane complex and the organosilicon compound having at least one silicon-bonded hydrogen atom (i.e., SiH group) per molecule are mixed in such a mixing ratio as to provide a molar excess of the SiH group in the organosilicon compound relative to the alkenyl group in the complex while they are kept in contact with water and/or oxygen.
